# EUROPÄISCHE PATENTSCHRIFT

(11) **EP 1 062 591 B1**
(45) Veröffentlichungstag und Bekanntmachung des Hinweises auf die Patenterteilung: **13.07.2016**
(21) Anmeldenummer: 99964412.3
(22) Anmeldetag: 06.12.1999
(51) Int. Cl.: G06F 15/78, G06F 12/06, G06F 9/318, G06F 1/22, G06F 13/40

(54) **PROGRAMMGESTEUERTE EINHEIT MIT INTERNEN UND EXTERNEN SPEICHERN**
PROGRAM-CONTROLLED UNIT WITH INTERNAL AND EXTERNAL MEMORIES
UNITE COMMANDEE PAR PROGRAMME A MEMOIRES INTERNES ET EXTERNES

(30) Priorität: 21.12.1998 DE 19859165
(43) Veröffentlichungstag der Anmeldung: 27.12.2000
(73) Patentinhaber: Infineon Technologies AG, 85579 Neubiberg (DE)
(72) Erfinder: ROHM, Peter, D-85276 Pfaffenhofen (DE)
(74) Vertreter: Jannig, Peter
(86) Internationale Anmeldenummer: PCT/DE1999/003897
(87) Internationale Veröffentlichungsnummer: WO 2000/038081

(56) Entgegenhaltungen:
- EP-A- 0 878 765
- WO-A-92/08231
- WO-A-96/38790
- US-A- 4 839 795
- US-A- 5 072 420
- US-A- 5 644 756
- US-A- 5 787 299

## Beschreibung

Die vorliegende Erfindung bezieht sich auf eine Vorrichtung gemäß dem Oberbegriff des Patentanspruchs 1, d.h. auf eine programmgesteuerte Einheit mit einem innerhalb derselben vorgesehenen internen Speicher.

Programmgesteuerte Einheiten dieser Art sind vor allem bestimmte Mikroprozessoren, Mikrocontroller, Signalprozessoren etc. Sie sind seit vielen Jahren in einer großen Vielzahl unterschiedlichster Ausführungsformen bekannt und bedürfen keiner weiteren Erläuterung.

Programmgesteuerte Einheiten mit internem Programm- und/oder Datenspeicher erweisen sich als vorteilhaft, weil sich damit die Größe von programmgesteuerte Einheiten enthaltenden Systemen gering halten läßt, und weil sich die im internen Speicher gespeicherten Daten vor einem unbefugten Auslesen und Manipulieren schützen lassen.

Der interne Speicher besteht in der Regel zumindest teilweise aus einem Speicher, der den darin gespeicherten Inhalt auch nach dem Ausschalten des Systems gespeichert hält, also beispielsweise einem ROM oder einem Flash-Speicher.

Dies ist vorteilhaft, weil die programmgesteuerte Einheit dadurch nach dem Einschalten völlig selbständig (ohne einen externen Speicher) hochfahren und die ihr zugedachte Aufgabe erfüllen kann, und weil sich die in einem derartigen Speicher gespeicherten Programme und Daten besonders gut vor unbefugten Zugriffen schützen lassen.

Andererseits gestaltet sich bei derartigen programmgesteuerten Einheiten das Testen von neuen oder modifizierten Programmen und/oder von den ausgeführten Programmen benutzten Daten relativ schwierig.

Wenn ein neues oder modifiziertes Programm und/oder neue oder modifizierte Daten getestet werden sollen, muß eine programmgesteuerte Einheit verwendet werden, deren interner Speicher mit dem neuen oder modifizierten Programm und/oder den neuen oder modifizierten Daten beschrieben ist.

Ist der interne Speicher ein ROM, so muß für den Test eine eigens für betreffenden Test angefertigte und danach nicht mehr anderweitig verwendbare programmgesteuerte Einheit verwendet werden. Ist der interne Speicher ein umprogrammierbarer Speicher wie beispielsweise ein Flash-Speicher, so muß dieser Speicher vor und nach jedem Test umprogrammiert werden. Insbesondere im erstgenannten Fall, aber auch in letzterem Fall ist das Testen von neuen oder modifizierten Programmen und/oder Daten erkennbar mit einem erheblichen Aufwand verbunden.

EP 0 878 765 offenbart ein Programmgesteuerte Einheit mit einem ersten Betriebsart für Zugriffe auf einen externen Speicher und einem zweiten Betriebsart für Zugriffe auf einen internen Speicher.

Der vorliegenden Erfindung liegt daher die Aufgabe zugrunde, die programmgesteuerte Einheit gemäß dem Oberbegriff des Patentanspruchs 1 derart weiterzubilden, daß der zum Testen von neuen oder modifizierten Programmen und/oder Daten zu treibende Aufwand auf ein Minimum reduzierbar ist.

Diese Aufgabe wird erfindungsgemäß durch das im kennzeichnenden Teil des Patentanspruchs 1 beanspruchte Merkmal gelöst.

Demnach ist eine Speicherzugriffs-Steuervorrichtung vorgesehen, durch welche Zugriffe auf einen oder mehrere bestimmte Bereiche des internen Speichers auf einen außerhalb der programmgesteuerten Einheit vorgesehenen externen Speicher umleitbar sind.

Dann kann das Testen von neuen oder modifizierten Programmen und/oder Daten unabhängig von den im internen Speicher der programmgesteuerten Einheit gespeicherten Programmen und Daten erfolgen; das zu testende Programm und/oder die von diesem verwendeten Daten können in dem externen Speicher bereitgestellt werden, auf den die Zugriffe auf den internen Speicher umgeleitet werden. Die Bereitstellung neuer oder modifizierter Programme und/oder Daten in einem externen Speicher läßt sich schnell, einfach und kostengünstig realisieren.

Der zum Testen von neuen oder modifizierten Programmen und/oder Daten zu treibende Aufwand ist so auf ein Minimum reduzierbar.

Weil beim Testen meist nicht die hohen Anforderungen zu erfüllen sind wie beim "normalen" Betrieb der programmgesteuerten Einheit, stellt es keinen Nachteil dar, daß anstelle des internen Speichers der programmgesteuerten Einheit teilweise ein externer Speicher verwendet wird.

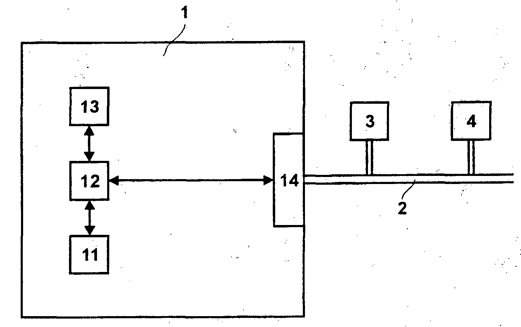

Vorteilhafte Weiterbildungen der Erfindung sind den Unteransprüchen, der folgenden Beschreibung und der Figur entnehmbar.

Die Erfindung wird nachfolgend anhand eines Ausführungsbeispiels unter Bezugnahme auf die Figur näher erläutert.

Die Figur zeigt schematisch den Aufbau der nachfolgend näher beschriebenen Anordnung.

Die in der Figur gezeigte Anordnung umfaßt einen Mikrocontroller 1, einen von diesem abgehenden externen Bus 2, einen an den externen Bus 2 angeschlossenen externen Speicher 3, und eine ebenfalls an den externen Bus 2 angeschlossene Recreation-Einheit 4.

Der Mikrocontroller 1 umfaßt einen Core 11, eine Speicherzugriffs-Steuervorrichtung 12, einen internen Speicher 13, und eine Businterface-Einheit 14.

Die in der Figur gezeigte und nachfolgend näher beschriebene Anordnung zeichnet sich insbesondere dadurch aus, daß der Mikrocontroller 1 die bereits erwähnte Speicherzugriffs-Steuervorrichtung 12 enthält. Durch diese Speicherzugriffs-Steuervorrichtung 12 können bei Bedarf auf den internen Speicher 13 erfolgende Zugriffe auf den externen Speicher 3 umgeleitet werden.

Es sei bereits an dieser Stelle darauf hingewiesen, daß die Speicherzugriffs-Steuervorrichtung nicht nur bei Mikrocontrollern einsetzbar ist; sie kann auch Bestandteil anderer programmgesteuerter Einheiten wie beispielsweise von Mikroprozessoren, Signalprozessoren etc. sein.

Ob ein auf den internen Speicher 13 erfolgender Zugriff auf den externen Speicher 3 umgeleitet wird oder nicht, hängt im betrachteten Beispiel von zwei Dingen ab, nämlich
1) von der Betriebsart, in der sich der Mikrocontroller 1 befindet, und
2) von der Adresse, auf die der Zugriff innerhalb des internen Speichers erfolgt.

Der Mikrocontroller 1 verfügt im betrachteten Beispiel über zwei Betriebsarten, nämlich eine Normal-Betriebsart und über eine Speicherzugriffsumleitungs-Betriebsart.

In der Normal-Betriebsart arbeitet der Mikrocontroller 1 normal. D.h., es erfolgen keine Speicherzugriffsumleitungen.

In der Speicherzugriffsumleitungs-Betriebsart werden auf den internen Speicher 13 erfolgende Zugriffe zumindest teilweise auf den externen Speicher 3 umgeleitet.

Das Einstellen der genannten Betriebsarten kann softwaremäßig oder hardwaremäßig (durch ein zu vorbestimmten oder beliebigen Zeiten durchzufürendes, vorübergehendes oder dauerhaftes Anlegen vorbestimmter Signale oder Daten an die Mikrocontroller-Pins) erfolgen.

Die in der Speicherzugriffsumleitungs-Betriebsart erfolgende Speicherzugriffsumleitung kann bei allen auf den internen Speicher 13 erfolgenden Zugriffen oder nur bei bestimmten, genauer gesagt bei auf bestimmte Adressen oder Adreßbereiche innerhalb des internen Speichers erfolgenden Zugriffen durchgeführt werden.

Welche Zugriffe umgeleitet werden, und wohin diese Zugriffe umgeleitet werden ist vorzugsweise individuell einstellbar.

Ob ein auf den internen Speicher 13 erfolgender Zugriff auf den externen Speicher 3 umgeleitet wird, und das Ziel der Umleitung (die Adresse innerhalb des externen Speichers 3) werden durch die Speicherzugriffs-Steuervorrichtung 12 bestimmt.

Wenn durch die Speicherzugriffs-Steuervorrichtung 12 bestimmt wird, daß eine Speicherzugriffsumleitung zu erfolgen hat, gibt sie über die Businterface-Einheit 14 und den externen Bus 2 an den externen Speicher 3 eine Leseanforderung und die Adresse, von der innerhalb des externen Speichers 3 gelesen werden soll, aus; der externe Speicher 3 gibt die unter der übertragenen Adresse gespeicherten Daten über den externen Bus 2 und die Businterface-Einheit 14 an die Speicherzugriffs-Steuervorrichtung 12 aus, welche sie an die anfordernde Einheit (im betrachteten Beispiel an den Core 11) weiterleitet. Die anfordernde Einheit erhält so trotz der Adressierung des internen Speichers 13 Daten aus dem externen Speicher 3.

Auf diese Weise lassen sich im internen Speicher 13 gespeicherte Programme, Programmteile und/oder Daten durch beliebige andere Programme, Programmteile und/oder Daten ersetzen, was bei bisherigen programmgesteuerten Einheiten entweder überhaupt nicht oder nur unter Inkaufnahme eines sehr großen Aufwandes möglich war.

Die Mikrocontroller-Pins, über welche die im Fall einer Speicherzugriffsumleitung durchzuführenden Adreß-, Daten-, und Steuersignal-Transfers zwischen dem Mikrocontroller 1 und dem externen Speicher 3 erfolgen (über welche der externe Bus 2 mit der Businterface-Einheit 14 verbunden ist), sind im betrachteten Beispiel Multifunktions-Pins (Pins, die nicht ausschließlich und nicht speziell zur Verbindung von Mikrocontroller 1 und externem Speicher 3 vorgesehen sind). Es handelt sich im betrachteten Beispiel um Pins, die in der Normal-Betriebsart des Mikrocontrollers als Port-Pins verwendet werden, und die in der Speicherzügriffsumleitungs-Betriebsart als Teil der Businterface-Einheit 14 verwendet werden.

Die eigentlich direkt an die Port-Pins anzuschließenden Peripherie-Einheiten sind an die Recreation-Einheit 4 angeschlossen.

Der Recreation-Einheit 4 obliegt es,
- vom Mikrocontroller erhaltene Daten, die für die Peripherie-Einheiten bestimmt sind, an die Peripherie-Einheiten weiterzuleiten, und
- von den Peripherie-Einheiten erhaltene Daten zwischenzuspeichern und zur Abholung durch den Mikrocontroller bereitzustellen.

Wenn der Mikrocontroller in der Normal-Betriebsart auf die Port-Pins zugreifen möchte, kann er dies in der Regel auf die übliche Art und Weise tun. Daß die an die Pört-Pins anzuschließenden Peripherie-Einheiten nicht unmittelbar, sondern nur mittelbar (über die Recreation-Einheit 4) mit dem Mikrocontroller verbunden sind, gilt nämlich vorzugsweise nur für die Speicherzugriffsumleitungs-Betriebsart; in der Normal-Betriebsart sind die an die Port-Pins anzuschließenden Peripherie-Einheiten vorzugsweise direkt mit den jeweils zugeordneten Port-Pins verbunden.

Wenn der Mikrocontroller in der Speicherzugriffsumleitungs-Betriebsart auf die Port-Pins zugreifen möchte, greift er nicht oder jedenfalls nicht sofort auf die Port-Pins zu. Er stellt statt dessen über den externen Bus 2 eine Verbindung zur Recreation-Einheit 4 her und veranlaßt diese, an die Peripherie-Einheiten auszugebende Daten oder Signale an die Peripherie-Einheiten auszugeben und/oder zuvor von den Peripherie-Einheiten empfangene und in der Recreation-Einheit 4 zwischengespeicherte Daten oder Signale an den Mikrocontroller auszugeben. Die Umleitung der Port-Pin-Zugriffe auf die Recreation-Einheit 4 erfolgt durch eine in der Figur nicht gezeigte Portpinzugriffs-Umleitungsvorrichtung.

Zugriffe des Mikrocontrollers auf dessen Ports bzw. die daran angeschlossenen Peripherie-Einheiten können wegen des Umweges über die Recreation-Einheit 4 länger dauern als es bei einer unmittelbaren Verbindung von Microcontroller und Peripherie-Einheiten der Fall ist. Solche Verzögerungen lassen sich jedoch für bestimmte Arten von Ein- und/oder Ausgabesignalen problemlos in Kauf nehmen und verändern das Verhalten des Systems nicht oder nur unbedeutend. Die über die Ports ein- und/oder ausgegebenen Signale und Daten sind in den allermeisten Fällen nicht so zeitkritisch, daß eine geringfügig verzögerte Eingabe oder eine geringfügig verzögerte Ausgabe zu Störungen führt. Peripherie-Einheiten, auf die sich derartige Verzögerungen störend auswirken, können auch an nicht als Multifunktions-Pins genutzte Port-Pins angeschlossen werden.

Vorstehend wurde davon ausgegangen, daß der Anschluß der Peripherie-Einheiten an den Mikrocontroller in der Normal-Betriebsart und in der Speicherzugriffsumleitungs-Betriebsart vorzugsweise unterschiedlich ist. Dies läßt sich durch entsprechende Schalter einstellen, wird aber in der Praxis normalerweise auch ohne Schalter oder dergleichen automatisch der Fall sein.

Die in der Figur gezeigte Anordnung ist nämlich eine Anordnung, die in erster Linie zum Testen von neuen oder modifizierten Programmen und/oder Daten verwendet werden wird. Sie ist insbesondere dafür gedacht, einen ohne externen Speicher und ohne Recreation-Einheit ausgestatteten und mithin ausschließlich in der Normal-Betriebsart betreibbaren (ersten) Mikrocontroller 1 beim Testen von neuen oder modifizierten Programmen und/oder Daten zu ersetzen, wobei der (zweite) Mikrocontroller 1, der in der den ersten Mikrocontroller 1 ersetzenden Anordnung (beispielsweise der in der Figur, gezeigten Anordnung) enthalten ist, mit einem externen Speicher und einer Recreation-Einheit ausgestattet ist und zweckmäßigerweise nur in der Speicherzugriffsumleitungs-Betriebsart betrieben wird.

Der interne Speicher eines Mikrocontrollers setzt sich üblicherweise aus einem internen Programmspeicher und einem internen Datenspeicher zusammen. Im betrachteten Beispiel werden durch die Speicherzugriffs-Steuervorrichtung 12 nur Zugriffe auf den internen Programmspeicher zum externen Speicher 3 umgeleitet.

Der interne Programmspeicher wird im betrachteten Beispiel allerdings nicht nur zur Speicherung von Programmen, sondern auch zur Speicherung von Daten, insbesondere von zur Programmausführung benötigten Tabellen, Kennlinienfeldern etc. verwendet. Die Speicherung von Daten im internen Programmspeicher erweist sich als vorteilhaft, weil der hierfür vorzugsweise verwendete Speichertyp (Flash-Speicher, ROM etc.) erheblich kleiner realisierbar ist als der für Datenspeicher üblicherweise verwendete Speichertyp (RAM).

Die Speicherbereiche, deren Adressierung zu einer Speicherzugriffsumleitung führen, sind im betrachteten Beispiel nur die zur Speicherung von Daten vorgesehenen Bereiche innerhalb des internen Programmspeichers. Dann kann durch die beschriebene Speicherzugriffsumleitung einfach, schnell und kostengünstig getestet werden, wie sich die Verwendung neuer oder modifizierter Daten (beispielsweise neuer oder modifizierter Tabellen oder Kennlinienfelder) auf das den Mikrocontroller enthaltende System auswirkt.

Selbstverständlich können zusätzlich oder alternativ auch Zugriffe auf Programme oder Programmteile speichernde Bereiche des internen Programmspeichers und/oder Zugriffe auf beliebige Teile des internen Datenspeichers umgeleitet werden.

Ob und gegebenenfalls welche Zugriffe auf den internen Speicher des Mikrocontrollers umgeleitet werden, wird zweckmäßigerweise vom konkreten Einzelfall abhängig gemacht.

Durch einen wie beschrieben oder ähnlich ausgebildeten Mikrocontroller wird es möglich, neue oder modifizierte Programme, Programmteile und/oder Daten mit minimalem Aufwand an existierenden System praktisch zu testen.

## Patentansprüche

1. Programmgesteuerte Einheit mit einem innerhalb derselben vorgesehenen internen Speicher (13), und mit einer Speicherzugriffs-Steuervorrichtung (12), welche dafür sorgt, daß in einer ersten Betriebsart der programmgesteuerten Einheit (1) Zugriffe auf den internen Speicher (13) auf einen außerhalb der programmgesteuerten Einheit (1) vorgesehenen externen Speicher (3) umgeleitet werden, und in einer zweiten Betriebsart der programmgesteuerten Einheit (1) keine Umleitung von Zugriffen auf den internen Speicher (13) erfolgt,
**dadurch gekennzeichnet,**
**daß** in der ersten Betriebsart der programmgesteuerten Einheit (1) nur Zugriffe auf einen oder mehrere bestimmte Bereiche des internen Speichers (13) auf den externen Speicher (3) umgeleitet werden, und
**daß** es einstellbar ist, welche Zugriffe auf den internen Speicher (13) in der ersten Betriebsart der programmgesteuerten Einheit (1) auf den externen Speicher (3) umgeleitet werden.

2. Programmgesteuerte Einheit nach Anspruch 1,
**dadurch gekennzeichnet,**
**daß** in der ersten Betriebsart der programmgesteuerten Einheit (1) nur Zugriffe auf bestimmte Adressen innerhalb des internen Speichers (13) auf den externen Speicher (3) umgeleitet werden.

3. Programmgesteuerte Einheit nach einem der vorhergehenden Ansprüche,
**dadurch gekennzeichnet,**
**daß** in der ersten Betriebsart der programmgesteuerten Einheit (1) nur ausgewählte oder alle Zugriffe auf den internen Programmspeicher der programmgesteuerten Einheit (1) auf den externen Speicher (3) umgeleitet werden.

4. Programmgesteuerte Einheit nach Anspruch 3,
**dadurch gekennzeichnet,**
**daß** in der ersten Betriebsart der programmgesteuerten Einheit (1) nur ausgewählte oder alle Zugriffe auf zur Speicherung von Daten verwendete Bereiche des internen Programmspeichers der programmgesteuerten Einheit (1) auf den externen Speicher (3) umgeleitet werden.

5. Programmgesteuerte Einheit nach einem der vorhergehenden Ansprüche,
**dadurch gekennzeichnet,**
**daß** der externe Speicher (3) über einen externen Bus (2) mit der programmgesteuerten Einheit (1) verbunden ist.

6. Programmgesteuerte Einheit nach Anspruch 5,
**dadurch gekennzeichnet,**
**daß** die Ein- und/oder Ausgabeanschlüsse der programmgesteuerten Einheit (1), über die diese mit dem externen Bus (2) verbunden ist, Multifunktions-Pins sind.

7. Programmgesteuerte Einheit nach Anspruch 6,
**dadurch gekennzeichnet,**
**daß** die Multifunktions-Pins in der zweiten Betriebsart der programmgesteuerten Einheit (1) als Port-Pins konfiguriert sind.

8. Programmgesteuerte Einheit nach Anspruch 6 oder 7,
**dadurch gekennzeichnet,**
**daß** die Multifunktions-Pins in der ersten Betriebsart der programmgesteuerten Einheit (1) als Busschnittstelle (14) zum externen Bus (2) konfiguriert sind.

9. Programmgesteuerte Einheit nach einem der Ansprüche 7 bis 8,
**dadurch gekennzeichnet,**
**daß** die programmgesteuerte Einheit (1) in der zweiten Betriebsart derselben über eine am externen Bus (2) angeschlossene Recreation-Einheit (4) mit in der ersten Betriebsart der programmgesteuerten Einheit (1) an den Port-Pins angeschlossenen Peripherieeinheiten kommunizieren kann.

## Claims

1. Program-controlled unit comprising an internal memory (13) provided within same, and comprising a memory access control device (12), which ensures that, in a first operating mode of the program-controlled unit (1) accesses to the internal memory (13) are diverted to an external memory (3) provided outside the program-controlled unit (1), and no diversion of accesses to the internal memory (13) is carried out in a second operating mode of the program-controlled unit (1), **characterized**
**in that**, in the first operating mode of the program-controlled unit (1), only accesses to one or more specific areas of the internal memory (13) are diverted to the external memory (3), and
**in that** it is possible to set which accesses to the internal memory (13) are diverted to the external memory (3) in the first operating mode of the program-controlled unit (1).

2. Program-controlled unit according to Claim 1,
**characterized**
**in that**, in the first operating mode of the program-controlled unit (1) only accesses to specific addresses within the internal memory (13) are diverted to the external memory (3).

3. Program-controlled unit according to either of the preceding claims,
**characterized**
**in that**, in the first operating mode of the program-controlled unit (1), only selected or all accesses to the internal program memory of the program-controlled unit (1) are diverted to the external memory (3).

4. Program-controlled unit according to Claim 3,
**characterized**
**in that**, in the first operating mode of the program-controlled unit (1) only selected or all accesses to areas of the internal program memory of the program-controlled unit (1) which are used for storing data are diverted to the external memory (3).

5. Program-controlled unit according to any of the preceding claims,
**characterized**
**in that**, the external memory (3) is connected to the program-controlled unit (1) via an external bus (2).

6. Program-controlled unit according to Claim 5, **characterized**
**in that** input and/or output terminals of the program-controlled unit (1) via which the latter is connected to the external bus (2) are multifunction pins.

7. Program-controlled unit according to Claim 6,
**characterized**
**in that** the multifunction pins are configured as port pins in the second operating mode of the program-controlled unit (1).

8. Program-controlled unit according to Claim 6 or 7,
**characterized**
**in that** the multifunction pins are configured as a bus interface (14) to the external bus (2) in the first operating mode of the program-controlled unit (1).

9. Program-controlled unit according to either of Claims 7 and 8,
**characterized**
**in that** the program-controlled unit (1) in the second operating mode thereof can communicate, via a recreation unit (4) connected to the external bus (2), with peripheral units connected to the port pins in the first operating mode of the program-controlled unit (1).

## Revendications

1. Unité commandée par programme avec une mémoire (13) interne prévue à l'intérieur de celle-ci et avec un dispositif de commande (12) d'accès à la mémoire qui assure que dans un premier mode de fonctionnement de l'unité (1) commandée par programme, des accès à la mémoire interne (13) soient détournés sur une mémoire externe (3) prévue à l'extérieur de l'unité (1) commandée par programme et que dans un deuxième mode de fonctionnement de l'unité (1) commandée par programme, il ne s'effectue aucun détournement d'accès à la mémoire interne (13),
**caractérisée en ce que**
dans le premier mode de fonctionnement de l'unité (1) commandée par programme, seuls des accès à une ou à plusieurs zones déterminée(s) de la mémoire interne (13) sont détournés sur la mémoire externe (3) et
qu'il peut être réglé quels sont les accès à la mémoire interne (13) qui dans le premier mode de fonctionnement de l'unité (1) commandée par programme sont détournés vers la mémoire externe (3).

2. Unité commandée par programme selon la revendication 1,
**caractérisée en ce que** dans le premier mode de fonctionnement de l'unité (1) commandée par programme, seuls des accès à certaines adresses à l'intérieur de la mémoire interne (13) sont détournés vers la mémoire externe (3).

3. Unité commandée par programme selon l'une quelconque des revendications précédentes,
**caractérisée en ce que** dans le premier mode de fonctionnement de l'unité (1) commandée par programme, seuls des accès choisis ou tous les accès à la mémoire interne de l'unité (1) commandée par programme sont détournés vers la mémoire externe (3).

4. Unité commandée par programme selon la revendication 3,
**caractérisée en ce que** dans le premier mode de fonctionnement de l'unité (1) commandée par programme, seuls des accès choisis ou tous les accès à des zones utilisées pour la sauvegarde de données de la mémoire de programme interne de l'unité (1) commandée par programme sont détournés sur la mémoire externe (3).

5. Unité commandée par programme selon l'une quelconque des revendications précédentes,
**caractérisée en ce que** la mémoire externe (3) est reliée à l'unité (1) commandée par programme par l'intermédiaire d'un bus (2) externe.

6. Unité commandée par programme selon la revendication 5,
**caractérisée en ce que** les connexions d'entrée et/ou de sortie de l'unité (1) commandée par programme par l'intermédiaire desquelles celle-ci est reliée avec le bus (2) externe sont des broches multifonctions.

7. Unité commandée par programme selon la revendication 6,
**caractérisée en ce que** dans le deuxième mode de fonctionnement de l'unité (1) commandée par programme, les broches multifonctions sont configurées en tant que broches de port.

8. Unité commandée par programme selon la revendication 6 ou la revendication 7,
**caractérisée en ce que** dans le premier mode de fonctionnement de l'unité (1) commandée par programme, les broches multifonctions sont configurées en tant qu'interface de bus (14) vers le bus (2) externe.

9. Unité commandée par programme selon l'une quelconque des revendications 7 à 8,
**caractérisée en ce que** dans le deuxième mode de fonctionnement de l'unité (1) commandée par programme, celle-ci peut communiquer par l'intermédiaire d'une unité de récréation (4) connectée sur le bus (2) externe avec des unités périphériques connectées sur les broches de port, dans le premier mode de fonctionnement de l'unité (1) commandée par programme.
